# EUROPEAN PATENT SPECIFICATION

(11) **EP 0 593 292 B1**
(45) Date of publication and mention of the grant of the patent: **09.06.1999**
(21) Application number: 93308190.3
(22) Date of filing: 14.10.1993
(51) Int. Cl.: A23L 1/308, A23L 1/20, A23L 1/10

(54) **A process for preparing fibre material with increased soluble dietary fibre content**
Verfahren zur Herstellung von Fasermaterial mit einem grösseren Gehalt an löslichen Diätfasern
Procéde de préparation d'un produit fibreux à teneur accrue en fibres solubles

(30) Priority: 14.10.1992 US 960621
(43) Date of publication of application: 20.04.1994
(73) Proprietor: PROTEIN TECHNOLOGIES INTERNATIONAL, INC., Saint Louis, Missouri 63164 (US)
(72) Inventor: Hoffman Grev, Ann, Webster Groves, Missouri 63119 (US); Madl, Ronald L., Sunset Hills, Missouri 63122 (US); Brown, Daniel W., St. Louis, Missouri 63139 (US)
(74) Representative: Tubby, David George

(56) References cited:
- EP-A- 0 112 621
- EP-A- 0 194 060
- EP-A- 0 421 758
- EP-A- 0 474 230

## Description

The present invention relates to a modified fibre material, preferably a legume or cereal grain fibre and most preferably a soy fibre material, which is characterized by an increased level of soluble dietary fibre and improved physical characteristics.

Dietary fibre has long been recognized as an important ingredient in the human diet, and, as a consequence, a variety of food products have included a dietary fibre source as an added ingredient. The addition of a fibre source as an ingredient increases the total dietary fibre content of the food product to which it is added. The term "total dietary fibre" is generally intended to refer to both insoluble and soluble dietary fibre and represents the analytical value obtained by analysis by a procedure such as that set forth in the "Journal of the Association of Official Analytical Chemists" (hereinafter abbreviated "JAOAC") 75(3), page 395 (1992). Generally speaking, the term "insoluble dietary fibre" refers to the fibrous portion which consists of cellulose, lignin, and hemicellulose and which is generally non-soluble or non-swellable in water. The term "soluble dietary fibre" includes generally non-cellulosic polysaccharides, pectins, gums and mucilages, which are generally water-soluble or swellable. While the specific nutritional advantages of each type of fibre are not entirely known, a balance of soluble and insoluble dietary fibre is thought to be beneficial by many nutritionists. The fibre derived from cereals, and legumes in particular, is predominantly insoluble fibre. However, a high percentage of insoluble fibre represents a physical or textural problem when added to a foodstuff which requires a smooth or creamy texture. Insoluble fibre has a more gritty textural quality than does soluble fibre, and, in the case of beverages, also can give rise to a solubility or dispersibility problem. It would therefore be advantageous to be able to increase the soluble dietary fibre content of a dietary fibre source to improve the overall functionality or physical characteristics of the fibre material and provide a fibre source which could easily be added to beverages, soups, sour cream, emulsified meats or other similar types of products.

Legume or cereal grain fibre materials, and especially soy fibre materials, have generally been of two types: one which is derived exclusively from hulls; and a second which is the cellulosic or hemicellulosic material which generally surrounds the protein bodies in a soy material such as soy flakes, which is made from defatted and dehulled soybeans. This latter fibrous or cellulosic fraction generally remains behind in a conventional process for the production of a soy protein isolate which involves the dispersal of the soy flakes in an aqueous medium and adjustment of the pH by the addition of an alkali. The protein is substantially solubilized in the aqueous solution and the insoluble residue is composed of the cellulosic and hemicellulosic materials which are not alkali-soluble. These insoluble solids are often referred to as the "spent flake residue". This insoluble fraction is then cleaned and dried to provide a soy dietary fibre material which has a relatively high insoluble dietary fibre content and a relatively low soluble dietary fibre content. For example, this material may typically have a total dietary fibre content which exceeds 70% by weight, of which about 90% or more is insoluble dietary fibre and 10% or less is soluble dietary fibre.

EP-A-0,474,230 discloses a partial hydrolysis treatment for obtaining modified insoluble dietary fibres, in which raw dietary fibre is acidified and heated, then cooled and neutralized, washed to remove soluble fibrous material, and dried to provide dry insoluble dietary fibres. EP-A-0,421,758 discloses a process for treating dietary fibre by heating an acidified slurry of the fibre, followed by washing to remove the acid, so as to enhance the antioxidant activity, bile acid absorbing capacity and water binding capacity of the dietary fibre. In both these references, soluble material is removed in the washing step.

We have now discovered a process for producing a fibre material of increased soluble dietary fibre content, especially from a legume or cereal grain fibre material, and which my also have improved physical or textural characteristics.

Thus, the present invention consists in a process for preparing a fibre material having an increased soluble dietary fibre content in which an aqueous slurry of an edible fibre material is adjusted to a pH of below 4.5, the pH adjusted slurry is heated for a temperature and a time sufficient to increase the soluble dietary fibre content of the fibre material, and the heated slurry is dewatered after heating.

In the process of the present invention, a fibre material of increased water soluble dietary fibre content may be prepared by forming an aqueous slurry of a fibre material, preferably a legume or cereal grain fibre material and most preferably a soy fibre material, such as the "spent flake residue" which represents the insoluble fibrous residue that remains following substantial extraction of the protein from soy flakes. The pH of the slurry is then adjusted to a pH of below 4.5 and preferably below about 3.5 by the addition of an acid, which would normally and preferably be an edible acid. The slurry is then heated at a temperature and for a time sufficient to increase the soluble dietary fibre content of the fibre material. The pH, temperature and time are interrelated to the extent that a lower pH may require a lower heating temperature whereas a higher pH may require a higher temperature and, in each situation, the time of heating may vary from a few seconds at a higher temperature to about 16-18 hours at room temperature. For example, in general terms, we prefer heating for a period of a few seconds at about 154°C (310°F) to a period of from 16 to 18 hours at room temperature. These conditions significantly increase the soluble dietary fibre content, for example, from a level of below 10% of the total dietary fibre content to a level of at least about 30% or higher of the total dietary fibre content in the case of soy fibre. The resulting modified fibre, when in a liquid, has a much higher viscosity and improved physical characteristics which make the modified fibre readily suspendable in aqueous media such as beverages with a very smooth and creamy mouthfeel. This unexpected improvement in physical characteristics overcomes many of the textural problems with the use of legume fibre material because of the relatively high level of insoluble dietary fibre that is normally found in fibre of this type. Following acidification and heating, the modified fibre material is dewatered, preferably by spray drying, to provide a dried food ingredient that, upon rewetting in an aqueous medium, retains the high viscosity and desirable physical characteristics which were achieved prior to dewatering These improved physical characteristics are retained even if the acidified material is neutralized prior to dewatering.

As an example, a soy fibre material prior to modification may have a total dietary fibre content of about 80% by weight of the fibre product, of which about 95% of the total dietary fibre content is commonly insoluble dietary fibre and only about 5% of the total dietary fibre content is soluble dietary fibre. By the same token the density of the unmodified soy fibre material is usually about 160 kg/m³ (10 lb./cu.ft). and an aqueous slurry of the material has a viscosity at 4% solids and room temperature of about 20 mPa.s (centipoise). Following modification pursuant to the present invention, the modified soy fibre material will normally still have a total dietary fibre content of about 80% by weight of the soy fibre material, however, about 50% of the total dietary fibre content can be expected to be insoluble dietary fibre while approximately 50% of the total dietary fibre content of the soy fibre material will now be soluble dietary fibre. Furthermore, following modification, the viscosity of a 4% aqueous slurry at room temperature will now be approximately 12,000 mPa.s (centipoise), which represents a dramatic and significant increase in viscosity. The viscosity of the slurry of modified soy fibre material will vary depending on the conditions for modification since the modification of the soy fibre pursuant to the present invention results in a significant increase in viscosity early in the reaction which will later diminish.

The fibre material which is used as the starting material for the process of the present invention is preferably an edible material and can be selected from various legume fibres, such as soy and pea fibre, derived from the hulls or cotyledons of the legumes as well as various cereal grain fibres, such as corn bran and the like. Most preferably, the starting material comprises the "soy spent flake residue" or the fibrous fraction which remains following substantial extraction of the protein such as would occur during a conventional process for the production of an isolated soy protein. A typical starting material which may be used for the soy isolate process are soy flakes which are derived from soybeans which have been dehulled. These soy flakes are also preferably defatted, for example by the use of a solvent, such as hexane or alcohol, prior to being used in the isolate process.

The spent flake residue from which the protein is substantially removed is typically treated prior to processing to improve the whiteness by the removal of debris or other materials that may have been inadvertently included in the starting material. A typical and preferred process for removal of any extraneous material from the spent flake residue is further described in British Patent No. 2,020,666. The preferred soy fibre material for use in the process of the present invention has a protein content on a dry basis of about 14%, an ash content of about 4% by weight on a dry basis, a density of about 240 kg/m³ (15lb./cu. ft). and a slurry viscosity at 4% solids and room temperature of about 20 centipoise.

In accordance with the present invention, the fibre material, such as the soy spent flake residue, which may have been dewatered or may be used in a wet state, is then formed into an aqueous slurry. This preferably has the maximum solids level which can be employed for ease of processing In any event, it preferably has a solids level of at least about 4% by weight and more preferably from 7 to 14% by weight.

The aqueous slurry, e.g. of the legume fibre material or spent flake residue, is then adjusted to a pH below 4.5 and preferably below about 3.5, normally by the addition of an edible acid. A preferred range is from pH 1.0 to pH 4.5. A most preferred range for pH is between about 2.0 and 3.0. The edible acid that is used for acidification is not critical to the present invention and may be selected from a wide variety of acids commonly used for this purpose including phosphoric and hydrochloric acids.

Following adjustment of the pH of the slurry of fibre material, the slurry is then heated for a time and temperature sufficient to modify the physical characteristics of the fibre material and increase the soluble dietary fibre content. Preferably, it increases the soluble dietary fibre content from below about 10% by weight to at least about 30% by weight or more of the total dietary fibre content in the case of a soy fibre material. In fact, it is not uncommon to achieve a soluble dietary fibre content of about 50% or more of the total dietary fibre content of the starting material in the case of a soy fibre. In the case of pea hulls, or cereal grain fibres the soluble dietary fibre content may be increased only from about 5 to 20% or more of the total dietary fibre content of the hulls. In the case of pea fibre derived from pea cotyledons, the increase is at least as much as is achieved with soy spent flake residue.

The time and temperature of heating is may vary over an extremely wide range, for example from a few seconds at a relatively high temperature to overnight (12 - 16 hours) at room temperature depending on the pH. Preferred times and temperature are from 82 to 154°C (180 to 310°F) from about a few seconds to about 30 minutes for the preferred pH range.

Following beat treatment and modification of the fibre material, the modified fibre is then preferably neutralized and dewatered. Although neutralization is not essential, nevertheless it is desirable for ease of processing and flavour. Preferably the pH of the modified fibre material is adjusted to about 7.0, for example by the addition of an edible alkali such as sodium hydroxide. Although the exact means used for dewatering of the modified soy fibre material is not critical it is preferred to spray-dry the material in order to dewater and the exact conditions including time and temperature for spray drying are conventional and well known to those skilled in the art.

The modified fibre, and preferably the modified soy fibre material, following dewatering may be used in a variety of food products as an added ingredient and as a source of dietary fibre. Because the soluble dietary fibre content of the material has been so dramatically increased as well as the physical characteristics, the modified fibre material of the present invention is very well suited for addition to food products in which a gritty texture will normally detract from the appearance and texture or the food product. Typical products to which the modified fibre material of the present invention may be added include beverages, such as juices, milks, sour cream, frozen dessert, soup, and emulsified meats such as hot dogs. The product is also suitable for other types of food applications such as baked goods and the like. Many other types of food applications are also possible because of the modified physical characteristics and the increased soluble dietary fibre content of the modified fibre material of the present invention.

The following Examples describe specific but non-limiting embodiments of the present invention.

### EXAMPLE 1

777 kg (1710 lb.) of an aqueous slurry of spent flake residue having a total solids level of 7.5% by weight and a pH of 8.98 was cleaned as described in British Patent 2,020,666. 91 kg (200 lb.) of the cleaned slurry were adjusted to a pH of 7.0 by the addition of 175 ml. of concentrated aqueous hydrochloric acid. This pH adjusted slurry was then sterilized by jet cooking at a temperature of about 152°C (305°F) for a retention time of about 9 seconds. The slurry was then spray-dried at an exhaust temperature of 93°C (200°F). This portion was designated as an untreated control sample.

A second portion of 686 kg (1510 lb.) of the slurry of spent flake residue was then adjusted to a pH of 4.0 by the addition of 1160 ml. of concentrated hydrochloric acid. The pH adjusted slurry had a total solids level of 6.9% by weight. The slurry was then heated by the addition of steam to a temperature of about 82°C (180°F) for 30 minutes. 91 kg (200 lb.) of the heated slurry was then sterilized and spray-dried as described above. This was designated as Sample 2. The other 91 kg (200 lb.) portion was first neutralized to a pH of about 7.0 by the addition of a 50% solution of sodium hydroxide and then jet cooked and spray-dried as described above. This was designated as Sample 3.

A 500 kg (1100 lb.) portion of the pH 4.0 aqueous slurry of spent flake residue was adjusted to a pH of 2.5 by the addition of concentrated hydrochloric acid. A 91 kg (200 lb.) portion of the slurry was sterilized in a jet cooker and spray-dried at the conditions described above. This was designated as Sample 4. Another 91 kg (200 lb.) portion was heated to a temperature of 82°C (180°F) for 30 minutes, then jet cooked and spray-dried under the conditions described above. This was designated as Sample 5.

Another 91 kg (200 lb.) portion of the slurry at a pH of 2.5 was also heated to 82°C (180°F) for 30 minutes by the addition of steam, then neutralized to a pH of about 7.0 by the addition of a 50% solution of sodium hydroxide then jet cooked and spray-dried as generally described above. This was designated as Sample 6.

A 91 kg (200 lb.) portion of the slurry at a pH of 2.5 was heated at a temperature of 82°C (180°F) for about 30 minutes by the addition of steam, neutralized to a pH of about 7.0 by the addition of 50% sodium hydroxide solution and then spray-dried as described above. This was designated as Sample 7.

All of the samples including the control were evaluated and analyzed for total dietary fibre, insoluble dietary fibre, soluble dietary fibre by the procedures described in the JAOAC 75(3), p. 395 (1992).

The samples were also analyzed for protein, moisture, ash, density and viscosity at 4% solids add room temperature. The results are set forth in Table 1 below and the analytical values are expressed on a dry basis of the product.

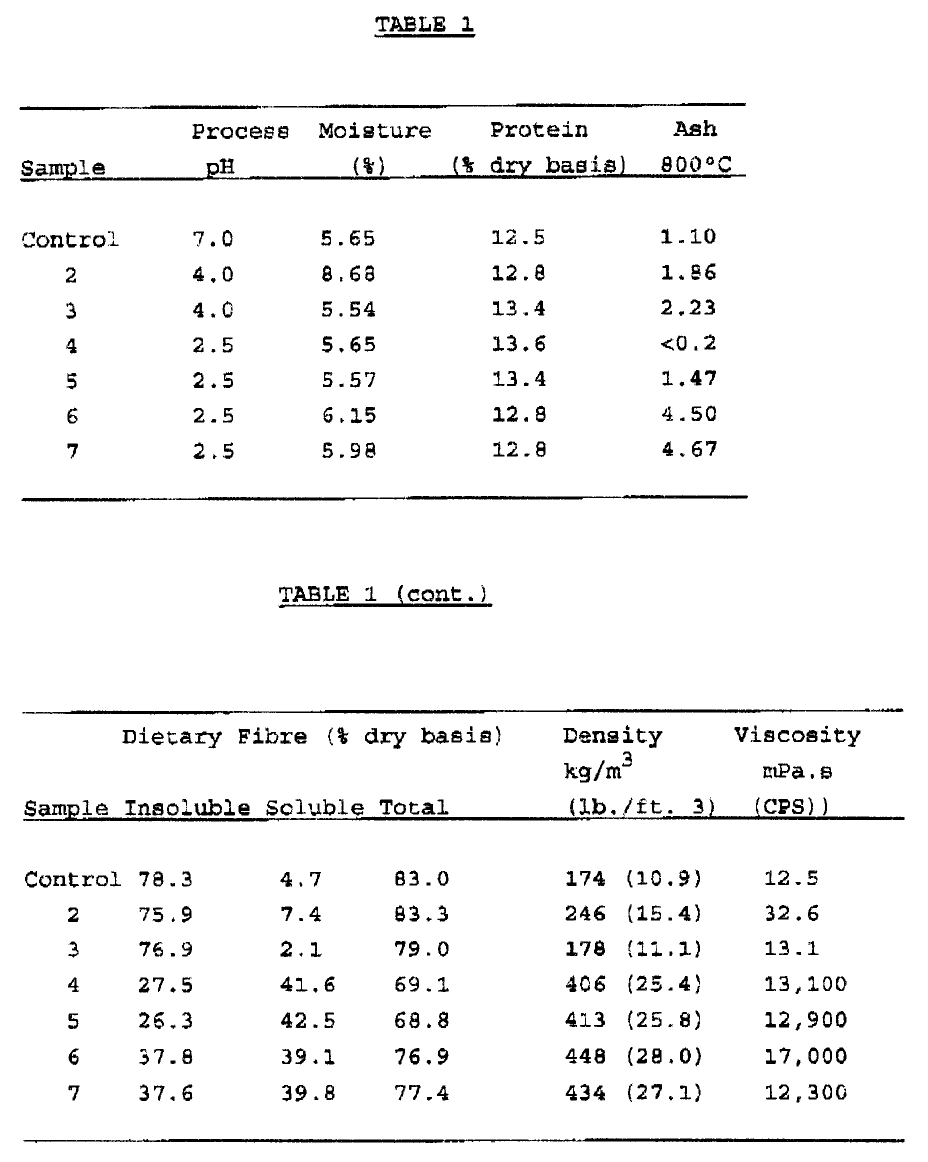

It may be seen from the results that the samples which were treated at a pH of 2.5 had a substantially increased soluble dietary fibre level with a significantly increased viscosity and density.

### EXAMPLE 2

468 kg (1030 lb.) of cleaned spent flake residue as described in Example 1 having a total solids level of 6.3-7.2% by weight was split into seven separate portions and then each of these separate portions was designated as samples A-G and jet cooked at the pH, temperature and for the retention time set forth in Table 2 below. Each of the samples following jet cooking was neutralized to a pH of about 7 by the addition of a 50% solution of sodium hydroxide and then spray-dried at an exhaust temperature of 93°C(200°F). Each of the treated samples were analyzed for total dietary fibre, insoluble dietary fibre and soluble dietary fibre as described in Example 1. Each sample was also analyzed for moisture, ash, protein and viscosity (2% solids) measured as described in Example 1. The results of this analysis including process conditions are described in Table 2 below.

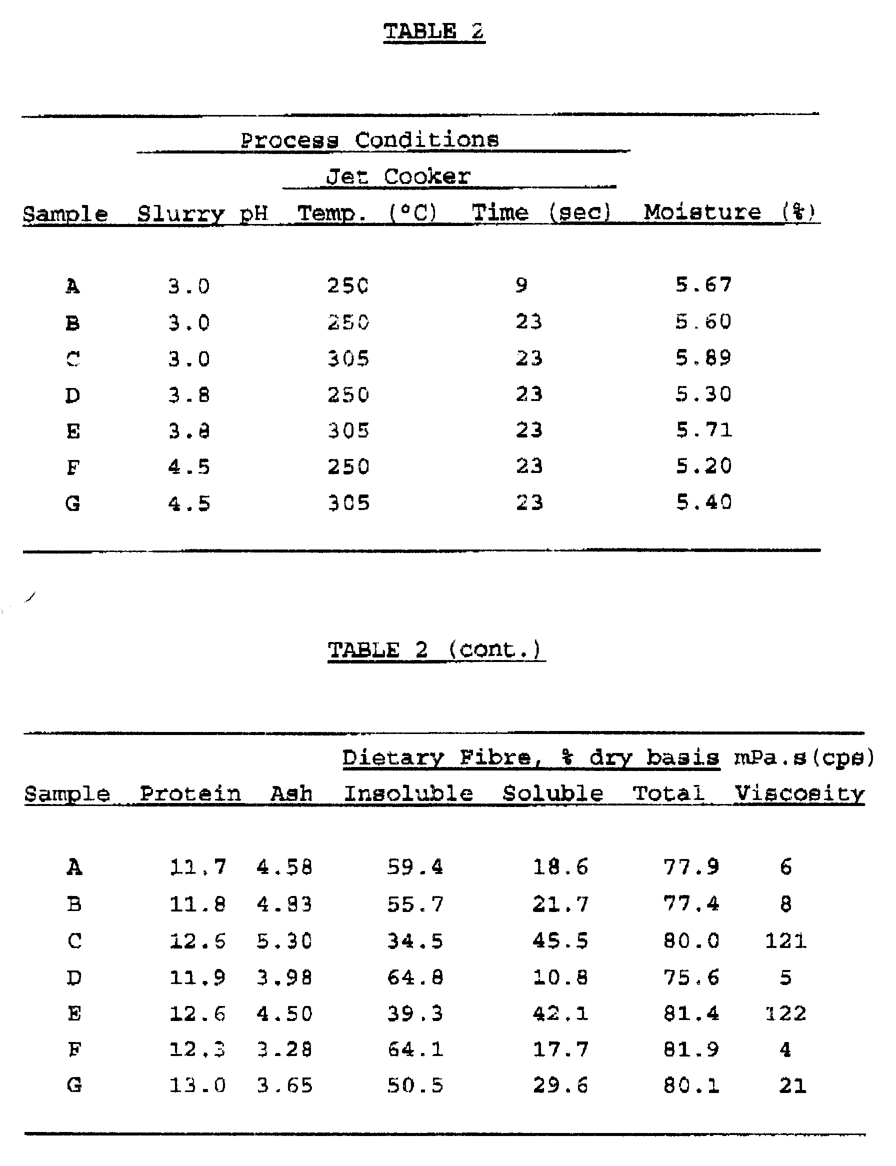

The results indicate that the reaction to increase soluble dietary fibre to above about 30% by weight is dependent on pH, time, and temperature to the extent that the lower the pH is, the less heating is required, in terms of time and temperature, whereas the higher the pH is, the more heating is rehired in terms of time and temperature.

### EXAMPLE 3

A portion of an aqueous slurry of soy spent flake residue having a pH of about 6.9 and a total solids content of 4% by weight was split into 300 ml. portions which was then adjusted to the process pH indicated in Table 3 below by the addition of concentrated hydrochloric acid. Each slurry was then heated to the indicated temperature and held at that temperature for the indicated period of time. Following heating each 300 ml portion was neutralized to a pH of about 7 by the addition of a 50% aqueous solution of sodium hydroxide. Each sample was then analyzed for total, insoluble, and soluble dietary fibre as described in Example 1. Viscosity of each sample was measured at 4% solids and room temperature. Evaluation of a control sample was made at the same time. The results of this testing is set forth in Table 3 below.

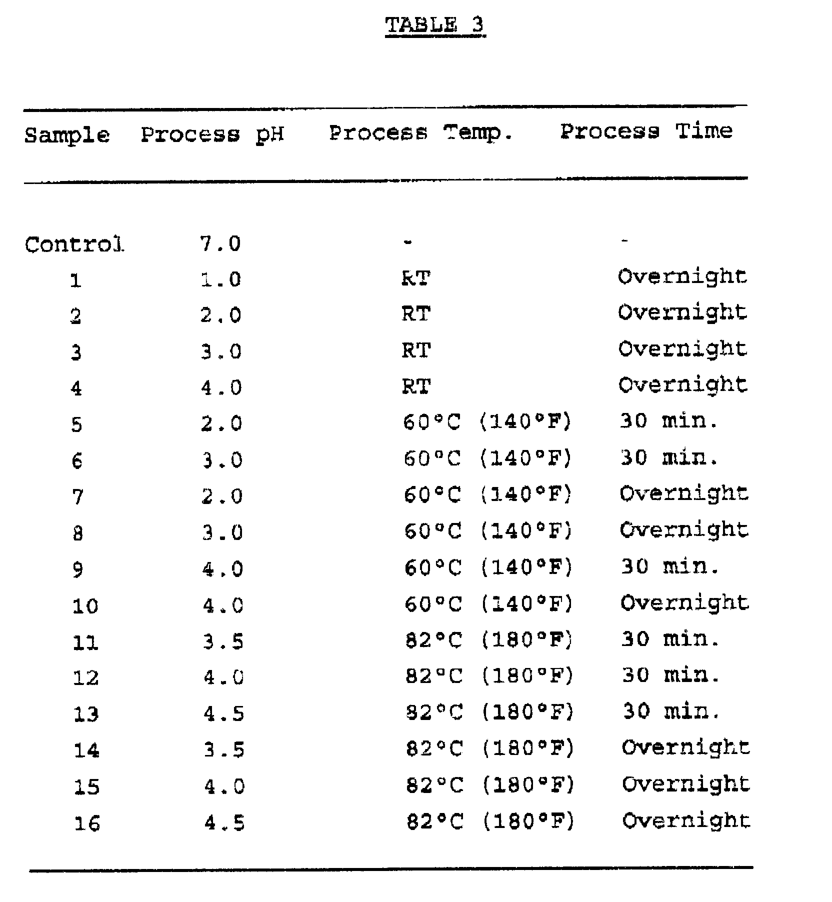

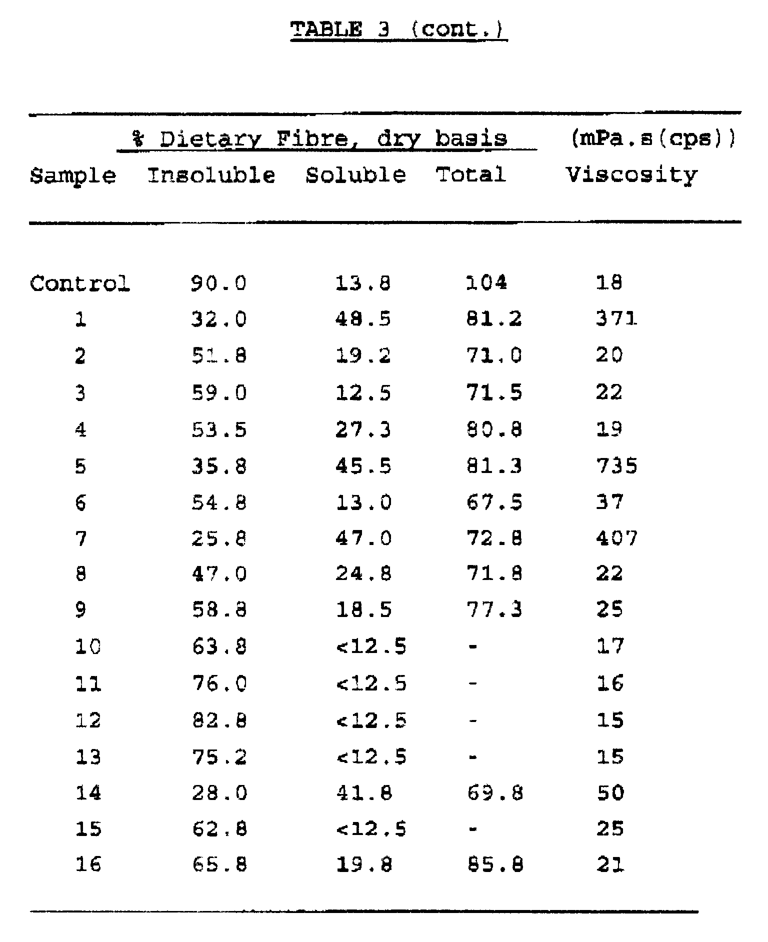

The above results indicate that the soluble dietary fibre can be substantially increased even at room temperature, provided that the pH is low enough.

### EXAMPLE 4

A pea fibre identified as "Hi Fi Lite" produced by Woodstone Foods Ltd., 1445 Church Avenue, Winnipeg, Manitaba, R2X 2X9, Canada, was formed into an aqueous slurry at 5% total solids. The slurry was split into two portions, the first portion was adjusted to a pH 2.0 by the addition of concentrated hydrochloric acid, and the second portion was adjusted to a pH of 1.0 by the addition of concentrated hydrochloric acid. Each of the pH adjusted samples were held overnight at 82°C (180°F). Following heating, the two heated samples were analyzed for total dietary fibre, including soluble and insoluble fibre by the procedure listed in Example 1, along with an untreated control. The analysis results are listed in Table 4.

**TABLE 4**

| | INSOLUBLE FIBRE | SOLUBLE FIBRE | TOTAL |
|---|---|---|---|
| Control | 74.7 | 3.6 | 78.2 |
| pH 2.0 | 46.9 | 15.7 | 62.6 |
| pH 1.0 | 40.4 | 13.1 | 53.5 |

It may be seen that the soluble dietary fibre has beer significantly increased by the acid treatment as described in the present invention.

### EXAMPLE 5

A pea fibre described as being made from dehulled peas and identified as "Grinsted P-FIBRE 150" produced by Grinsted Products, Inc., 201 Industrial Parkway, Topeka, Kansas 66031, was formed into an aqueous slurry at 5% total solids. The slurry was split into two portions, the first portion was adjusted to a pH of 2.0 by the addition of concentrated hydrochloric acid, and the second portion was adjusted to a pH of 1.0 by the addition of concentrated hydrochloric acid. Each of the pH adjusted samples were held overnight at 82°C (180°F).

Following heating, the two treated samples were analyzed for total dietary fibre, along with an untreated control sample, including soluble and insoluble dietary fibre by the procedure listed in Example 1. The analysis results are listed in Table 5.

**TABLE 5**

| | Insoluble Fibre | Soluble Fibre | Total |
|---|---|---|---|
| Control | 38.9 | 5.6 | 44.5 |
| pH 2.0 | 13.9 | 14.3 | 28.2 |
| pH 1.0 | 13.0 | 10.4 | 23.4 |

The soluble dietary fibre has been significantly increased by the procedure of the present invention

### EXAMPLE 6

A corn bran identified as "Bestbran" 90 G-ultrafine refined corn bran, produced by A. E. Staley, Decatur, Illinois, was formed into an aqueous slurry at 10% total solids, split into two portions as described in Example 5. The portions were treated as described in Example 5. The two treated samples, along with an untreated control, were analyzed for total dietary fibre, including soluble and insoluble dietary fibre by the procedure listed in Example 1. The results are listed in Table 6.

**TABLE 6**

| | Insoluble Fibre | Soluble Fibre | Total |
|---|---|---|---|
| Control | 91.0 | 1.4 | 92.4 |
| pH 2.0 | 48.5 | 19.0 | 67.5 |
| pH 1.0 | 29.9 | <6.2 | --.-- |

The results show an increase in soluble dietary fibre by the process of the present invention.

## Claims

1. A process for preparing a fibre material having an increased soluble dietary fibre content in which an aqueous slurry of an edible fibre material is adjusted to a pH of below 4.5, the pH adjusted slurry is heated for a temperature and a time sufficient to increase the soluble dietary fibre content of the fibre material, and the heated slurry is dewatered after heating.

2. A method according to Claim 1, in which the aqueous slurry is formed at a solids level of at least 4% by weight.

3. A method according to Claim 2, in which said aqueous slurry is formed at a solids level of from 7 to 14% by weight.

4. A method according to any one of Claims 1 to 3, in which said fibre is a legume fibre or a cereal grain fibre.

5. A method according to Claim 4, in which the fibre material is a soy fibre material.

6. A method according to Claim 5, in which the soy fibre material is the spent flake residue which remains following substantial extraction of the protein from soy flakes.

7. A method according to any one of Claims 1 to 6, in which the dewatering is carried out by spray drying.

8. A method according to any one of Claims 1 to 7, in which the pH of the slurry is adjusted to below about 3.5.

9. A method according to any one of Claims 1 to 7, in which the pH of the slurry is adjusted to between about 1.0 and 4.5.

10. A method according to Claim 9, in which the pH of the slurry is adjusted to between about 2.0 and 3.0

11. A method according to any one of Claims 1 to 10, in which the time and temperature is between a few seconds at about 154°C (310°F), and from 16 to 20 hours at room temperature.

## Patentansprüche

1. Verfahren zur Herstellung eines Fasermaterials mit einem größeren Gehalt an löslichen Diätfasern, bei dem eine wäßrige Aufschlämmung eines genußtauglichen Fasermaterials auf einen pH-Wert unter 4,5 eingestellt wird, die pH-Wert-eingestellte Aufschlämmung auf eine Temperatur und für eine Zeit erhitzt wird, die ausreichend sind, um den Gehalt an löslichen Diätfasern des Fasermaterials zu erhöhen, und die erhitzte Aufschlämmung nach dem Erhitzen entwässert wird.

2. Verfahren nach Anspruch 1, bei dem die wäßrige Aufschlämmung mit einem Feststoffgehalt von mindestens 4 Gew.-% erzeugt wird.

3. Verfahren nach Anspruch 2, bei dem die wäßrige Aufschlämmung mit einem Feststoffgehalt von 7 bis 14 Gew.-% erzeugt wird.

4. Verfahren nach einem der Ansprüche 1 bis 3, bei dem die Faser eine Hülsenfruchtfaser oder eine Getreidekornfaser ist.

5. Verfahren nach Anspruch 4, bei dem das Fasermaterial ein Sojafasermaterial ist.

6. Verfahren nach Anspruch 5, bei dem das Sojafasermaterial der ausgelaugte Flockenrückstand ist, der im Anschluß an die weitgehende Extraktion des Proteins aus Sojaflocken verbleibt.

7. Verfahren nach einem der Ansprüche 1 bis 6, bei dem das Entwässern durch Sprühtrocknen ausgeführt wird.

8. Verfahren nach einem der Ansprüche 1 bis 7, bei dem der pH-Wert der Aufschlämmung auf unter etwa 3,5 eingestellt wird.

9. Verfahren nach einem der Ansprüche 1 bis 7, bei dem der pH-Wert der Aufschlämmung auf zwischen etwa 1,0 und 4,5 eingestellt wird.

10. Verfahren nach Anspruch 9, bei dem der pH-Wert der Aufschlämmung auf zwischen etwa 2,0 und 3,0 eingestellt wird.

11. Verfahren nach einem der Ansprüche 1 bis 10, bei dem die Zeit und Temperatur zwischen wenigen Sekunden bei etwa 154°C (310°F) und von 16 bis 20 Stunden bei Raumtemperatur liegen.

## Revendications

1. Procédé pour préparer une matière fibreuse ayant une teneur en fibres diététiques solubles accrue, dans lequel une suspension épaisse aqueuse d'une matière fibreuse comestible est réglée à un pH inférieur à 4,5, la suspension épaisse à pH ajusté est chauffée à une température et pendant un temps suffisants pour augmenter la teneur en fibres diététiques solubles de la matière fibreuse, et la suspension épaisse chauffée est déshydratée après le chauffage.

2. Procédé selon la revendication 1, dans lequel la suspension épaisse aqueuse est formée à un taux de matières solides d'au moins 4% en poids.

3. Procédé selon la revendication 2, dans lequel ladite suspension épaisse aqueuse est formée à un taux de matières solides de 7 à 14% en poids.

4. Procédé selon l'une quelconque des revendications 1 à 3, dans lequel ladite fibre est une fibre de légumineuse ou une fibre de grains céréaliers.

5. Procédé selon la revendication 4, dans lequel la matière fibreuse est une matière de fibres de soja.

6. Procédé selon la revendication 5, dans lequel la matière de fibres de soja est le résidu floconneux épuisé qui reste après l'extraction substantielle de la protéine de flocons de soja.

7. Procédé selon l'une quelconque des revendications 1 à 6, dans lequel la déshydratation est effectuée par séchage par pulvérisation.

8. Procédé selon l'une quelconque des revendications 1 à 7, dans lequel le pH de la suspension épaisse est réglé à moins d'environ 3,5.

9. Procédé selon l'une quelconque des revendications 1 à 7, dans lequel le pH de la suspension épaisse est réglé entre environ 1,0 et 4,5.

10. Procédé selon la revendication 9, dans lequel le pH de la suspension épaisse est réglé entre environ 2,0 et 3,0.

11. Procédé selon l `une quelconque des revendications 1 à 10, dans lequel le temps et la température sont entre quelques secondes à environ 154°C (310°F) et de 16 à 20 heures à température ambiante.
